# EUROPEAN PATENT SPECIFICATION

(11) **EP 0 896 842 B1**
(45) Date of publication and mention of the grant of the patent: **06.03.2002**
(21) Application number: 98112776.4
(22) Date of filing: 09.07.1998
(51) Int. Cl.: B21D 28/00, B21D 43/08, B21D 43/28, B23D 35/00

(54) **Punching machine for sheet metal in the form of individual sheets or strip**
Vorrichtung zum Stanzen von Einzelmetallplatten oder Metallband
Machine de poinçonnage des tôles individuelles ou d' une bande métallique

(30) Priority: 13.08.1997 IT VE970035
(43) Date of publication of application: 17.02.1999
(73) Proprietor: DALLAN S.R.L., 31033 Castelfranco Veneto (IT)
(72) Inventor: Dallan, Sergio, 31033 - Castelfranco Veneto (IT)
(74) Representative: Piovesana, Paolo

(56) References cited:
- FR-A- 2 621 507
- BAREIS A: "ANLAGEN UND STEUERUNGSSYSTEME ZUM PERFORIEREN VON BLECHEN" WERKSTATTSTECHNIK,DE,SPRINGER VERLAG. BERLIN, vol. 79, 1 January 1989 (1989-01-01), pages 587-590, XP002052166 ISSN: 0340-4544
- PATENT ABSTRACTS OF JAPAN vol. 012, no. 055 (M-669), 19 February 1988 (1988-02-19) & JP 62 203627 A (AIDA ENG LTD), 8 September 1987 (1987-09-08)

## Description

This invention relates to a punching machine for sheet metal in the form of individual sheets or strip.

Known punching machines for sheet metal are divided into two basic categories, namely punching machines operating on sheet metal in the form of strip and sheet metal in the form of individual sheets.

Punching machines for metal strip are generally equipped with a fixed roller feeder positioned upstream of the punching head and operated by a microprocessor which feeds the strip in accordance with the predetermined working cycle.

Because of the position of the roller feeder and its method of operation, these known punching machines are not able to operate on sheet metal in the form of individual sheets, in that the finite length of these latter prevents their movement after their rear transverse edge has left the two feed rollers.

Punching machines for sheet metal in the form of individual sheets are generally equipped with a feeder comprising mobile grippers which clamp the individual sheets in fixed positions and move them relative to the punching head. As this clamping is effected in fixed positions, generally an edge of the sheet, known punching machines for individual sheets cannot operate on metal strip, in which the contact zone varies as the strip advances.

An object of the invention is to provide a punching machine which can operate on sheet metal in the form of individual sheets or continuous strip, without distinction.

A further object of the invention is to provide a punching machine which can automatically adapt to operate on sheet metal in the form of individual sheets or strip.

A further object of the invention is to provide a punching machine which does not differ substantially from a traditional punching machine and can therefore be formed by only limited modifications thereto.

"Bareis A: Anlagen und Steuerungssysteme zum Perforieren von Blechen - Werkstattstechnik, Springer Verlag, Berlin, 1989" already discloses punching machines for sheet metal in the form of individual sheets or strip, comprising a punching head and a pair of feeders, one positioned upstream and one downstream of said punching head and coordinated in their operation in relation to the type of sheet metal to be worked. However these known punching machines have not any provision to avoid, while operating, the working incorrectnesses due to differences of weight and lengths of the loop of bands of different thickness, present upstream the upstream feeder.

A further object of the invention is to eliminate also this drawback. All these objects and further ones are attained according to the invention through a punching machine for sheet metal as described in claim 1.

A preferred embodiment of the invention is described in detail hereinafter with reference to the accompanying drawings, on which:
- Figure 1: is a view a punching machine, shown in longitudinal section with reference to the direction of movement of the sheet metal to be worked;
- Figure 2: is a cross-section therethrough on the line II-II of Figure 1; and
- Figure 3: is a plan view thereof in the direction III-III of Figure 1.

As can be seen from the figures, the punching machine comprises a bed 2, on which a multi-tool punching head 4 is mounted. As the punching head 4 is of traditional type and hence does not form part of the present invention, its construction and operation will not be described, it being merely stated that its operation is evidently synchronized with the movement of the sheet metal passing between its tools.

For the two sides of the punching head 4, with reference to the direction of advancement of the sheet metal 6, which can consist either of an individual sheet or a continuous strip, there are provided two feed units indicated overall by the reference numerals 8 and 8'. In the illustrated example these are of roller type, although they can also be of gripper type.

Both the feeders 8, 8' comprise substantially two rollers 10, 12, of which the lower roller 10 is motorized, whereas the upper roller 12 is mounted idle on a shaft which can be moved vertically to cause said roller to approach or withdraw from the corresponding lower roller 10.

Both the motor which drives the lower roller 10 of each feeder 8, 8' and the actuator which vertically moves each upper roller 12 relative to the corresponding lower roller 10 are controlled by the same microprocessor, which governs the entire operating cycle of the punching machine.

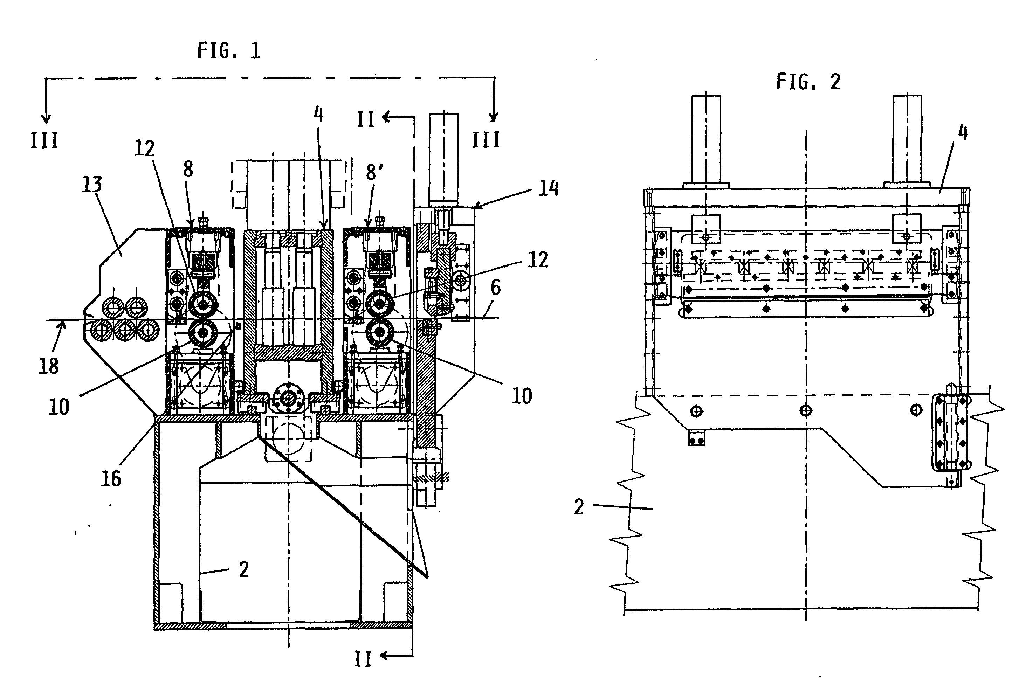

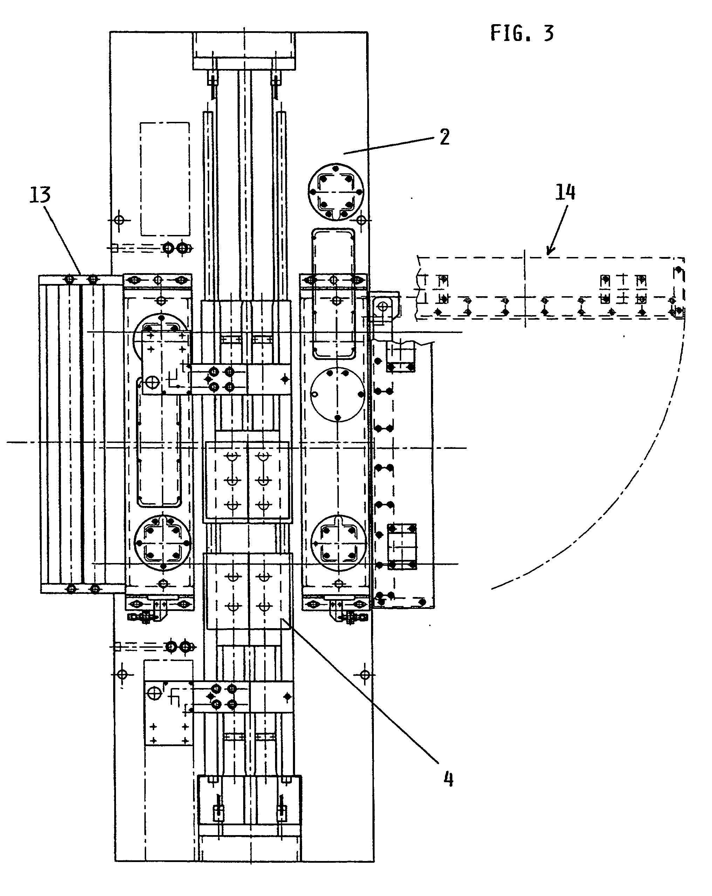

Associated with the feeder 8, and specifically upstream of it, there is provided a roller straightening unit 13 the activation and deactivation of which depends on the type of sheet metal (individual sheets or strip) to be worked. Associated with the feeder 8', and specifically downstream of it, there is provided a transverse cutting unit, indicated overall by 14 and hinged to the bed 2 to pass from an operating position, shown in Figure 1, to a non-operating position, shown by dashed lines in Figure 3.

In the illustrated example both feeders 8, 8' are provided with an independent drive, however they can also derive their movement from a single drive via transmission systems comprising shafts and bevel gear couplings.

The punching machine operates as follows: if continuous sheet metal strip 6 is to be punched, the straightening unit is activated, ie its upper rollers are lowered to create with the lower rollers an interference sufficient to correct any curvature presented by sheet metal strip originating from the reel. Again if punching continuous sheet metal strip, the cutting unit is arranged in its active state, ie with the blades positioned transversely below and above the continuous metal strip which advances in the direction indicated by the arrow 18 in Figure 1. Finally, the downstream feeder 8' is maintained with its upper roller 12 raised, so that the feeder is inactive in practice, and the movement of the metal strip 6 is due exclusively to the upstream feeder 8. The upper roller 12 of the downstream feeder 8' is maintained in its inactive state by the action of a sensor 16 provided immediately downstream of the upstream feeder 8 and able to cause activation of the downstream feeder 8' if absence of sheet metal is detected.

Consequently under such working conditions, in working sheet metal strip the punching machine behaves substantially as a traditional punching machine.

In contrast, to work sheet metal in the form of individual sheets, in the punching machine the straightening unit is deactivated, upstream of this a sheet feeder (not shown) is activated and the cutting unit is arranged in its inactive position (see Figure 3).

Under these conditions the upstream feeder 8 is constantly active, whereas the downstream feeder 8' is activated by the sensor 16 only if an individual sheet of metal 6 is absent.

This is achieved by activating only the upstream feeder 8 if the two feeders 8 and 8' have independent drives, whereas if only one drive is provided it is achieved by holding the upper roller 12 of the downstream feeder 8' raised from the corresponding lower roller 10.

When an individual metal sheet 6 is to be punched, it is moved by the upstream feeder 8 alone in accordance with the predetermined working cycle. As it advances it also reaches the downstream feeder 8', to rest on its lower roller 10, which is however unable to perform any dragging action on it as there is no cooperation by the upper roller 12. However as soon as the sheet 6 leaves the upstream feeder 8, the sensor 16 senses this circumstance and causes the upper roller 12 of the downstream feeder 8' to descend, to hence grip the sheet 6 and continue the dragging action, which is no longer possible by the upstream feeder 8.

Basically, while the upstream feeder 8 can be considered a feeder of normal operation, of the type provided in punching machines for feeding continuous strip, the downstream feeder 8' can be considered an auxiliary or service feeder, which intervenes on the basis of the same operating cycle as the first, which the sheet metal to be punched can no longer be moved by it.

From the aforegoing it is apparent that, by virtue of the presence of the two operationally coordinate feeders 8, 8', the punching machine is particularly advantageous in that:
- it operates without distinction on continuous strip or on individual metal sheets 6,
- it automatically adapts to operate with one or the other type of material to be punched,
- it can be formed from traditional punching machines by simply adding a second feeder and the necessary means for coordinating their operation.

## Claims

1. A punching machine for sheet metal in the form of individual sheets or strip, comprising at least one punching head (4) and a pair of feeders (8, 8') one positioned upstream and one downstream of said punching head and coordinated in their operation in relation to the type of sheet metal to be worked for conveying the sheet metal (6) relative to said head, on the basis of the predetermined working cycle, **characterised by** comprising, upstream of the upstream feeder (8) and associated therewith, a unit for straightening sheet metal strip and which can be deactivated if working sheet metal in the form of individual sheets.

2. A punching machine as claimed in claim 1, **characterised in that** each feeder (8, 8') is of roller type, comprising at least one motorized lower roller (10) and one idle upper roller (12).

3. A punching machine as claimed in claim 1, **characterised in that** each feeder (8, 8') is of gripper type.

4. A punching machine as claimed in claim 2, **characterised in that** at least one roller (12) of each feeder (8, 8') can be spaced from the other roller (10) of the same feeder.

5. A punching machine as claimed in claim 1, **characterised in that** the downstream feeder is coordinated with means for activating its operation and which are coordinated with a signal indicating the absence of sheet metal (6) in the upstream feeder (8).

6. A punching machine as claimed in claim 5, **characterised by** comprising a sensor (16) for sensing the presence of sheet metal leaving the upstream feeder (8).

7. A punching machine as claimed in claim 1, **characterised by** comprising, downstream of the downstream feeder (8'), a transverse cutting unit (14) which can be deactivated if working sheet metal in the form of individual sheets (6).

8. A punching machine as claimed in claim 7, **characterised in that** the transverse cutting unit (14) is hinged to the bed (2) of the punching machine about a vertical axis, to pass from an active position in which the cutting blades are positioned transversely below and above the sheet metal strip (6), to an inactive position in which the cutting blades are positioned parallel to and external to the sheet metal strip.

## Patentansprüche

1. Stanzmaschine für Blech in der Form von einzelnen Blechstücken oder Streifen, enthaltend zumindest einen Stanzkopf (4) und ein Paar von Vorschubeinrichtungen (8, 8'), von denen eine stromauf und die andere stromab des Stanzkopfes angeordnet ist und die in deren Betrieb in bezug auf die Art des zu bearbeitenden Bleches koordiniert sind, um das Blech (6) gegenüber dem Kopf auf der Basis eines vorbestimmten Arbeitszyklus zu fördern, **dadurch gekennzeichnet, daß** sie eine Einheit für das Begradigen eines Blechstreifens enthält, die stromauf der stromauf angeordneten Vorschubeinrichtung (8) angeordnet ist und mit dieser in Verbindung steht und die zur Bearbeitung von Blech in Form einzelner Stücke deaktiviert werden kann.

2. Stanzmaschine nach Anspruch 1, **dadurch gekennzeichnet, daß** jede Vorschubeinrichtung (8, 8') vom Rollen-Typ ist, und wenigstens eine angetriebene untere Rolle (10) und eine lose obere Rolle (12) enthält.

3. Stanzmaschine nach Anspruch 1, **dadurch gekennzeichnet, daß** jede Vorschubeinrichtung (8, 8') vom Greifer-Typ ist.

4. Stanzmaschine nach Anspruch 2, **dadurch gekennzeichnet, daß** wenigstens eine Rolle (12) einer jeden Vorschubeinrichtung (8, 8') von der anderen Rolle (10) der selben Vorschubeinrichtung distanziert werden kann.

5. Stanzmaschine nach Anspruch 1, **dadurch gekennzeichnet, daß** die stromab angeordnete Vorschubeinrichtung mit Mitteln zur Aktivierung deren Betriebes zusammenwirken, und die mit einem Signal koordiniert sind, das die Abwesenheit von Blech (6) bei der stromauf gelegenen Vorschubeinrichtung (8) anzeigt.

6. Stanzmaschine nach Anspruch 5, **dadurch gekennzeichnet, daß** sie einen Sensor (16) enthält, der zum Erfassen der Anwesenheit eines Blechs dient, das die stromauf gelegene Vorschubeinrichtung (8) verläßt.

7. Stanzmaschine nach Anspruch 1, **dadurch gekennzeichnet, daß** sie eine in Querrichtung schneidende Einheit (14) enthält, die stromab der stromab gelegenen Vorschubeinrichtung (8') angeordnet ist, die bei der Bearbeitung von Blech in Form von einzelnen Stücken (6) deaktiviert werden kann.

8. Stanzmaschine nach Anspruch 7, **dadurch gekennzeichnet, daß** die in Querrichtung schneidende Einheit (14) an dem Bett (2) der Stanzmaschine angelenkt und um eine vertikale Achse schwenkbar ist, um von einer aktiven Stellung, in der die Schneidblätter quer unterhalb und oberhalb des Blechstreifens (6) positioniert sind, in eine inaktive Stellung bewegt werden zu können, in der die Schneidblätter parallel und außerhalb des Blechstreifens positioniert sind.

## Revendications

1. Machine de poinçonnage de tôles métalliques présentant la forme de tôles individuelles ou d'un feuillard, comprenant au moins une tête de poinçonnage (4) et deux dispositifs d'alimentation (8, 8') dont l'un est disposé en amont et l'autre en aval de ladite tête de poinçonnage et dont le fonctionnement est coordonné au type de tôle métallique à traiter, pour transporter la tôle métallique (6) par rapport à ladite tête en fonction du cycle de travail prédéterminé, **caractérisée en ce qu'**elle comprend en amont du dispositif d'alimentation (8) situé en amont et associée à ce dernier une unité de redressement du ruban de tôle métallique qui peut-être désactivée si la tôle métallique à travailler présente la forme de tôles individuelles.

2. Machine de poinçonnage selon la revendication 1, **caractérisée en ce que** chaque dispositif d'alimentation (8, 8') est du type à rouleaux et comprend au moins un rouleau inférieur motorisé (10) et un rouleau supérieur (12) à rotation libre.

3. Machine de poinçonnage selon la revendication 1, **caractérisée en ce que** chaque dispositif d'alimentation en (8, 8') est du type à pinces.

4. Machine de poinçonnage selon la revendication 2, **caractérisée en ce qu'**au moins un rouleau (12) de chaque dispositif d'alimentation (8, 8') peut être écarté de l'autre rouleau (10) du même dispositif d'alimentation.

5. Machine de poinçonnage selon la revendication 1, **caractérisée en ce que** le dispositif d'alimentation situé en aval est coordonné à des moyens d'activation de son fonctionnement qui sont coordonnés à un signal indiquant l'absence de tôle (6) dans le dispositif d'alimentation (8) situé en amont.

6. Machine de poinçonnage selon la revendication 5, **caractérisée en ce qu'**elle comprend un détecteur (16) pour détecter la présence de tôle métallique quittant le dispositif d'alimentation (8) situé en amont.

7. Machine de poinçonnage selon la revendication 1, **caractérisée en ce qu'**elle comporte en aval du dispositif d'alimentation (8') situé en aval une unité de découpe transversale (14) qui peut-être désactivée si la tôle métallique de travail présente la forme de tôles individuelles (6).

8. Machine de poinçonnage selon la revendication 7, **caractérisée en ce que** l'unité transversale de découpe (14) est articulée sur le lit (2) de la machine de poinçonnage autour d'un axe vertical, pour passer d'une position active dans laquelle les lames de découpe sont disposées transversalement en dessous et au-dessus du feuillard de tôle métallique (6), jusque dans une position inactive dans laquelle les lames de découpe sont disposées parallèlement et à l'extérieur du feuillard de tôle métallique.
